# EUROPÄISCHE PATENTSCHRIFT

(11) **EP 0 885 716 B1**
(45) Veröffentlichungstag und Bekanntmachung des Hinweises auf die Patenterteilung: **21.08.2002**
(21) Anmeldenummer: 98110897.0
(22) Anmeldetag: 15.06.1998
(51) Int. Cl.: B32B 27/12, B32B 27/34, D04H 13/00, E04D 12/00

(54) **Kratz- und reissfester Verbund aus Trägerschicht und Kunststoffschicht, insbesondere für Unterspannbahnen**
Scratch and tear resistant composite comprising a carrier layer and a resin layer, especially for underroof membranes
Structure composite résistante aux rayures et à la déchirure, comprenant un support et une couche de résine, en particulier pour membrane sous-toiture

(30) Priorität: 16.06.1997 DE 19725417
(43) Veröffentlichungstag der Anmeldung: 23.12.1998
(73) Patentinhaber: Caplast Kunststoffverarbeitungs GmbH, 59394 Nordkirchen (DE)
(72) Erfinder: Alteepping, Josef, Dipl.-Ing., 59394 Nordkirchen (DE); Nienhaus, Ralf, 59394 Nordkirchen (DE)
(74) Vertreter: Kindler, Matthias, Dr. Dipl.-Chem.

(56) Entgegenhaltungen:
- EP-A- 0 560 630
- EP-A- 0 708 212
- DE-A- 19 522 333
- DE-U- 29 511 308
- US-A- 5 069 955

## Beschreibung

Die vorliegende Erfindung betrifft einen Verbund aus einer Trägerschicht und einer Kunststoffschicht, der für Wasserdampf, nicht jedoch für flüssiges Wasser durchlässig ist und der als Unterspannbahn, insbesondere für unbelüftete, wärmegedämmte Steildachkonstruktionen, bestehend aus Pfetten, Balken und Sparren, einsetzbar ist.

Unterspannbahnen haben die Aufgabe, das ungedeckte Dach zunächst vor Regeneintrieb zu schützen. Nach der Hartbedachung soll der Eintrieb von Flugschnee, Spritz- und Tauwasser und feinen Staubpartikeln in die Wärmedämmung verhindert werden. Gleichzeitig soll Wasserdampf, der als Feuchteüberschuß aus der Baufeuchte und aus bewohnten Bereichen des Daches stammen kann, über die diffusionsfähige Wärmedämmung und die Unterspannbahn an die Umgebung abgegeben werden. Dabei kann die gesamte, zwischen den Dachsparren angebrachte Wärmedämmung als Feuchtigkeitsspeicher dienen, wobei darauf zu achten ist, daß der Taupunkt, bei dem Kondenswasser niedergeschlagen wird, nicht unterschritten wird. Dies kann durch den Einbau einer unter der Bedachung liegenden Dampfsperre oder -bremse in die Dachkonstruktion verhindert werden.

Besitzt die verlegte Unterspannbahn keine oder eine zu geringe Wasserdampfdurchlässigkeit, so kann ein im Dachbereich vorliegender Feuchtigkeitsüberschuß an der Unterspannbahn kondensieren, die Wärmedämmung durchfeuchten und damit u.a. ihre Funktion herabsetzen. Dieses Einsatzgebiet erfordert daneben eine hohe mechanische Festigkeit des verwendeten Verbunds und eine gute Haftfestigkeit zwischen den Verbundschichten.

Aus EP 0 169 308 B1 ist eine Unterspannbahn bekannt, die aus einer Polyurethanfolie besteht, die einseitig mit einer Vliesschicht fest verbunden ist und auf der anderen Seite freiliegt. Die Vliesschicht ist wasserdurchlässig und besitzt bei einer Verlegung der Unterspannbahn mit dachseitig innenliegender Vliesschicht eine Pufferwirkung für Wasserdampf. Die dachseitig außenliegende Polyurethanfolie ist allein wasserdampfdurchlässig und schützt die Wärmedämmung vor von außen eindringendem Wasser und Staub. In der Praxis ergeben sich jedoch für die in EP 0 169 308 B1 beschriebenen Unterspannbahnen nur geringe Wasserdampfdurchlässigkeiten, so daß die Umsetzung der Wärmeschutzverordnung erschwert ist. Zudem besitzt die Polyurethanfolie nur eine geringe Kratzfestigkeit.

Eine weitere, in DE 34 25 795 C2 beschriebene Unterspannbahn wird aus Polyester-Block-Amiden (PEBA) des hydrophilen Typs geformt und ist als Feuchtigkeitsspeicher ausgebildet, der bis zu etwa 120% seines Eigengewichts an Wasser speichern kann. Sie besitzt zwar in der Praxis eine Wasserdampfdurchlässigkeit von ungefähr 1000 g/(m² d), aber aufgrund der fehlenden Vliesschicht ist diese Art Unterspannbahn mechanisch nur sehr wenig belastbar, und es bilden sich schnell Undichtigkeiten, wenn die Unterspannbahn während der Verlegung verletzt wird.

In DE 44 37 521 A1 wird gezeigt, daß eine Kombination einer solchen PEBA-Folie mit einer Vliesschicht eine erhöhte mechanische Festigkeit besitzt, daß diese Kombination aber nur über kurze Zeit wasserbeständig ist und sich beide Schichten wegen der unterschiedlichen Ausdehnungskoeffizienten bei Feuchtigkeitsaufnahme voneinander lösen. Daher wird in DE 44 37 521 A1 versucht, dieses Problem unter Beibehaltung der hohen Wasserdampfdurchlässigkeit dadurch zu lösen, daß auf beide Seiten einer als Sperrschicht dienenden Kunststoffolie eine Vliesschicht aufgebracht wird. Dadurch sollen die Scherkräfte bei Feuchtigkeitsaufnahme kompensiert werden und der Verbund der Unterspannbahn gesichert werden. Nachteilig bei dieser Konstruktion ist, daß eine ausreichende mechanische Festigkeit des gesamten Verbunds erst durch einen dreischichtigen Aufbau erreicht wird, so daß die Herstellung komplizierter und wegen des erhöhten Materialbedarfs einer dritten Schicht wirtschaftlich ungünstiger wird. Zusätzlich bleiben die schlechten mechanischen Eigenschaften der Kunststoffsperrschicht auch bei dieser Konstruktion bestehen, da die äußeren Vliesschichten die Sperrschicht nicht gegen alle Einflüsse von außen abschirmen können.

Das Gebrauchsmuster DE 295 11 308 U1 betrifft Dachunterspannbahnen aus wasserdampfdurchlässigen und wasserdichten PEBA-Folien, die mit mindestens einer zweiten Schicht, wie beispielsweise einer Abdeckvlieslage, zusammenlaminiert sind. In den Dachunterspannbahnen dieses Gebrauchsmusters wird die mechanische Festigkeit des Verbundes erreicht, indem eine PEBA-Folie, die relativ dünn sein kann, mit der Abdeckvlieslage verbunden wird. Dieses Dokument gibt keinen Hinweis auf konkret verwendbare Materialien der Kunststoffschicht.

Die EP 0 560 630 A1 betrifft Zweikomponentenpolymerfilme, die eine erste und eine zweite Schicht eines Polymermaterials umfassen. Dabei besteht das Material der ersten Polymerschicht aus einem hydrophilen Blockpoly(ethercoamid), das 20 bis 80 Gew.-% Polyethylenglycolblöcke enthält, und einem hydrophoben Polymer. Die zweite Polymerschicht umfasst ein Polymer oder eine Mischung von Polymeren, die in Form eines Films von etwa 1 mm Dicke eine Mindesttransmissionsrate für Wasserdampf von 1000 g/m²/Tag haben, und die eine Gleichgewichtswasserabsorption von weniger als 25 % sowie eine Absorption einer wäßrigen, 70 prozentigen Isopropanollösung von weniger als 50 % haben. Der Zweikomponentenpolymerfilm kann mit einem Gewebe zusammenlaminiert werden und wird im Hospitalsektor (z.B. für Wundverbände und OP-Kleidung) und für Schutzkleidung verwendet. Die Anwendung der Zweikomponentenpolymerfilme für Dachunterspannbahnen wird in der EP 0 560 630 A1 nicht angesprochen. Die mechanischen Eigenschaften der Polymerfilme wären für diesen Anwendungsbereich ohnehin nicht ausreichend.

Es ist daher eine Aufgabe der vorliegenden Erfindung, unter Vermeidung der obengenanten Nachteile des Standes der Technik einen Verbund zur Verfügung zu stellen, der bei einfachem und damit kostengünstigem Aufbau und geringem Materialaufwand eine hohe mechanische Festigkeit, eine hohe Haftung zwischen den Verbundkomponenten und eine ausreichende Diffusionsfähigkeit für Wasserdampf besitzt und als Unterspannbahn eingesetzt werden kann. Eine weitere Aufgabe besteht darin, ein Verfahren zur Herstellung des erfindungsgemäßen Verbundes zur Verfügung zu stellen.

Die obige erste Aufgabe wird erfindungsgemäß dadurch gelöst, daß der Verbund eine Trägerschicht und eine wasserdampfdurchlässige Kunststoffschicht mit einer Dehnung von 250 bis 500 % (nach DIN 53455/ISO 527), bevorzugt von 280 bis 380 %, einer Kratzfestigkeit von 60 bis 90 Shore D, bevorzugt von 75 bis 89 Shore D, und einer Wasserdampfdurchlässigkeit (nach DIN 53122, Klima B) von 250 bis 1500 g/(m²d), bevorzugt von 500 bis 1000 g/(m²d) umfaßt.

Kunststoff- und Trägerschicht können direkt miteinander laminiert sein, oder es kann eine zusätzliche Klebstoffschicht zwischen beiden Schichten vorhanden sein. Ebenfalls ist es möglich, die mechanische Festigkeit und die rutschhemmenden Eigenschaften des Verbunds durch eine zusätzliche Verstärkungsschicht auf der Kunststoff- oder Trägerschicht noch weiter zu erhöhen. Als Beispiele für eine solche Verstärkungsschicht sind Bier eine Gitterarmierung und eine Vliesschicht genannt.

Die Kunststoffschicht der vorliegenden Erfindung ist bevorzugt 20-150 µm dick, besonders bevorzugt 40-45 µm. Je geringer die Dicke ist, desto günstiger sind die Diffusionsfähigkeit und aus wirtschaftlicher Sicht der Materialaufwand. Dabei sind im Vergleich zu den im Stand der Technik verwendeten Materialien auch geringe Schichtdicken möglich, ohne daß die Gefahr einer Verletzung der Kunststoffschicht und damit der Verlust ihrer Sperrwirkung gegen flüssiges Wasser auftritt.

Die Wasserdampfdurchlässigkeit (nach DIN 53122, Klima B) der Kunststoffschicht beträgt 250-1500 g/(m² d), bevorzugt 500-1000 g/(m² d). Dadurch wird ein zwischen den beiden Seiten des Verbundes bestehender Feuchtigkeitsgradient schnell ausgeglichen, und bei Verwendung als Unterspannbahn erleichtert der Verbund die Umsetzung der Wärmeschutzverordnung, so daß eine Kondensation von Wasser an der dachseitig innenliegenden Seite des Verbundes und ein Durchnässen der Wärmedämmung weitgehend verhindert werden.

Die Kunststoffschicht besteht aus einem oder mehreren wasserdampfdurchlässigen Kunststoffen mit den obigen hohen Dehnungs- und Kratzfestigkeitswerten, wobei als Material bevorzugt thermoplastische Kunststoffe eingesetzt werden, es können aber auch Duroplaste verwendet werden.

In einer bevorzugten Ausführungsform besteht die Kunststoffschicht aus einem (Co)polyamid, und in besonders bevorzugter Weise aus einem Polyamid-6/Polyamid-66/Polyamid-12-Blockcopolymer. Diese hydrophilen Polymere besitzen eine hohe Permeabilität für Wasserdampf und resultieren deshalb in weiter verbesserten Eigenschaften des erfindungsgemäßen Verbundes.

Für die Trägerschicht können beliebige geeignete Materialien verwendet werden, z.B. Wirk- und Strickwaren, Gewebe, Papier, Folien und Vliese. Die Trägerschicht besitzt bevorzugt ein Flächengewicht von 20-300 g/m², besonders bevorzugt 50-150 g/m². Zwar steigt mit zunehmendem Flächengewicht die mechanische Festigkeit des Verbunds weiter an, doch erhöhen sich auch die Materialkosten. Andererseits vereinfacht eine leichtere Trägerschicht die Handhabung des erfindungsgemäßen Verbundes bei Transport und Einsatz, beispielsweise als Unterspannbahn. Die Dicke der Trägerschicht beträgt daher bevorzugt 0,15 bis 1,5 mm, besonders bevorzugt 0,3 bis 0,6 mm, um die Dichte und somit das Volumen des Verbundes für den Transport und die Verarbeitung gering zu halten. Eine feuchtigkeitspuffernde Wirkung der Trägerschicht ist auch bei einer Verwendung als Unterspannbahn nicht erforderlich, da diese Eigenschaft von der heutzutage vorgeschriebenen Wärmedämmung ausreichend erfüllt wird.

In einer speziellen Ausführungsform der Erfindung wird als Trägerschicht eine Vliesschicht eingesetzt. Die Vliesschicht kann nach unterschiedlichen Spinnverfahren als orientiertes Wirr- oder Nadelvlies und aus Mono- und Bikomponentenfasern hergestellt werden. In einer bevorzugten Ausführungsform bestehen die Fasern der Vliesschicht aus einem oder mehreren Polymeren ausgewählt aus Polyamid, Polyester oder Polyolefin. Wegen niedriger Materialkosten und dennoch hoher mechanischer Eigenfestigkeit ist es weiter bevorzugt, daß die Fasern aus einem Polyesterkern und einem Polyamidmantel bestehen.

Es ist besonders bevorzugt, die Kunststoffschicht aus dem gleichen Material wie die Vliesschicht herzustellen. In diesem Fall wird die Haftung der beiden Schichten aufeinander vereinfacht. In einer weiter bevorzugten Ausführungsform besteht die Vliesschicht aus einer Polymerfaser mit Polyamidmantel und Polyesterkern und die Kunststoffschicht aus einem (Co)polyamid. Es ist am meisten bevorzugt, als Trägerschicht des Verbunds eine Vliesschicht aus einer Polymerfaser mit Polyamidmantel und Polyesterkern und als Kunststoffschicht ein Polyamid-6/Polyamid-66/Polyamid-12-Blockcopolymer einzusetzen. Damit werden besonders hohe mechanische Festigkeit, Diffusionsfähigkeit und auch eine gute Rezyklierbarkeit erreicht, da der geringe Polyesteranteil der Vliesfasern bei der Wiederverwertung nicht stört.

Die Kunststoffschicht kann weitere Bestandteile wie Füllstoffe, UV-Stabilisatoren, Farbstoffe und Pigmente enthalten. Wird der erfindungsgemäße Verbund als Unterspannbahn verwendet, kann es vorteilhaft sein, die Kunststoffschicht zu einem solchen Grad dunkel einzufärben, daß sie noch transluzent ist. Bei der Verarbeitung (Verlegung) besitzt der Verbund dann eine geringe Blendwirkung, doch können die Dachsparren und -balken wegen der dünnen Trägerschicht noch durch den Verbund hindurch erkannt werden, was die Sicherheit für den Dachdecker erhöht.

Der Verbund wird erfindungsgemäß in einem Verfahren hergestellt, das die folgenden Schritte umfaßt:
(a) Extrudieren einer Mischung, die ein Granulat des thermoplastischen Kunststoffs umfaßt, durch eine schlitzartige Düse zu einer Kunststoffschicht;
(b) Ablegen der extrudierten Kunststoffschicht auf einer Trägerschicht und Laminieren der so hergestellten Kombination aus Trägerschicht und Kunststoffschicht, wobei die Trägerschicht auf der der Kunststoffschicht zugewandten Seite der Kunststoffschicht zugewandten Seite gegebenenfalls mit einem Klebstoff versehen wird; und
(c) gegebenenfalls Laminieren der Kunststoffschicht und/oder Trägerschicht mit einer Verstärkungsschicht auf der außenliegenden Seite der Kunststoffschicht bzw. der Trägerschicht.

Auf diese Weise wird ein erfindungsgemäßer Verbund aus einer Trägerschicht und einer damit fest verbundenen, wasserdampfdurchlässigen, mechanisch hoch stabilen Kunststoffschicht erzielt.

Schritt (a) erfolgt bevorzugt in einer 3-Zonenschnecke, wobei die Schicht über ein Breitschlitzwerkzeug extrudiert wird. Es ist geeignet, die Extrusionsmischung im Extruder bei einem bevorzugten Druck von 140-160 bar (14-16 MPa) auf eine Temperatur von vorzugsweise 190-230°C aufzuheizen.

Das sich im Schritt (b) an das Ablegen der Kunststoffschicht anschließende Laminieren erfolgt, wenn kein Kaschieren durch Auftragen eines Klebstoffs auf die der Kunststoffschicht zugewandten Seite der Trägerschicht durchgeführt wird, in bevorzugter Weise zwischen Walzen, die auf einer Temperatur von 10-20°C gehalten werden.

Bei der Laminierung im Schritt (b) können die Kunststoffschicht und die Trägerschicht ebenfalls mittels Schmelzklebern (Hotmelts) oder lösungsmittelhaltigen Klebern kaschiert werden. Durch Laminieren der extrudierten Kunststoffschicht mit der Trägerschicht, die auf der der Kunststoffschicht zugewandten Seite mit einem Klebstoff behandelt wird, entsteht ein erfindungsgemäßer Verbund. Lösungsmittelhaltige Kleber liegen flüssig als Plastisol vor. Nach Auftragen des lösungsmittelhaltigen Klebstoffs auf die Trägerschicht, Extrusion und Ablegen der Kunststoffschicht und Laminieren der Kombination werden die Lösungsmittel in einem Trockenkanal abgedampft, so daß ein erfindungsgemäßer Verbund entsteht.

Im Fall der Verwendung von Schmelzklebern können diese beispielsweise vor der Laminierung auf die Trägerschicht aufgesprüht oder aufgestreut werden. Das Laminieren findet in diesem Fall zwischen Heizwalzen statt, die auf eine Temperatur oberhalb des Schmelzpunkts des Schmelzklebers aufgeheizt sind, so daß ebenfalls ein erfindungsgemäßer Verbund erhalten wird. Schmelzkleber sind durch einen niedrigen Schmelzpunkt (<180°C, häufig <100°C) und eine sehr niedrige Schmelzviskosität bei gleichzeitig hohem Schmelzindex (MFR) charakterisiert.

Die Anbringung einer optionalen Verstärkungsschicht im Schritt (c) kann durch Laminieren einer Verstärkungsschicht auf der außenliegenden Seite der Trägerschicht vor Schritt (a) oder nach Schritt (b) und/oder auf der außenliegenden Seite der Kunststoffschicht nach Schritt (b), oder durch Coextrusion einer Verstärkungsschicht auf der außenliegenden Seite der Kunststoffschicht im Schritt (a) erfolgen.

Wenn die Kunststoffschicht aus einem Duroplast besteht, kann sie durch Schmelzkleber oder lösungsmittelhaltige Klebstoffe mit dem Trägermaterial kaschiert werden, und es können gegebenenfalls weitere Verstärkungsschichten auf den so erhaltenen Verbund aufgebracht werden.

Der erfindungsgemäße Verbund kann als Unterspannbahn für Dachkonstruktionen, insbesondere für unbelüftete, wärmegedämmte Steildachkonstruktionen, die auch vollverschalt sein können, bestehend aus Pfetten, Balken und Sparren, verwendet werden. Dabei wird der Verbund dergestalt auf den Sparren und der Wärmedämmung angebracht, daß die Trägerschicht dachseitig innen und die Kunststoffschicht dachseitig außen liegt. Auf diese Weise wird die Wärmedämmung vor von außen eindringendem Wasser gegen Durchnässen geschützt, andererseits kann Feuchtigkeit aus dem Dachinneren durch die Trägerschicht des Verbundes hindurchgelangen und durch die Kunststoffschicht nach außen diffundieren, ohne daß die Gefahr einer Kondensation an der Verbundinnenseite besteht.

Aufgrund der ausgezeichneten mechanischen Festigkeit der Kunststoffschicht, die durch die mechanischen Eigenschaften der Trägerschicht weiter verbessert wird, ist eine aus dem erfindungsgemäßen Verbund bestehende Unterspannbahn ferner den in der Praxis üblichen Belastungen bei der Verlegung gewachsen, ohne daß Undichtigkeiten durch Risse oder Löcher zu befürchten sind.

Im folgenden wird die Erfindung anhand eines Beispiels näher erläutert.

Ein Verbund wird durch Aufbringen einer Kunststoffschicht aus Polyamid-6/Polyamid-66/Polyamid-12-Copolymer (Platamid® H 105 TA 70 der Fa. Elf Ato) auf eine Vliesschicht (Colback® CD 50 der Fa. Akzo Nobel; Fasern aus Polyesterkern mit Polyamidmantel; Flächengewicht 50 g/m²; Dicke 0,3 mm; Reißfestigkeit MD nach DIN 53857 125 N/5 cm) hergestellt. Dazu wird das Kunststoffgranulat mit einer 3-Zonenschnecke mit Breitschlitzwerkzeug extrudiert. Die Temperatur und der Druck des Kunststoffs in der 3-Zonenschnecke betragen 205°C bzw. 150 bar (15 MPa). Das Extrudat und die Vliesbahn werden durch Walzen zwischen einem auf 17°C gekühlten Walzenpaar laminiert, so daß ein 0,3 mm dickes Verbundmaterial entsteht.

Die Kunststoffschicht im so erhaltenen Verbund besitzt eine Dehnung von 280-380% (DIN 53455) und eine Kratzfestigkeit von 75-80 Shore D, und der Verbund selbst weist eine Wasserdampfdurchlässigkeit von 420 g/(m² d) (DIN 53122, Klima B) auf.

Das Ausführungsbeispiel zeigt, daß der erfindungsgemäße Verbund hervorragende Eigenschaften bezüglich der mechanischen Festigkeit, wie der Dehnung und Kratzfestigkeit, bei gleichzeitig hoher Wasserdampfdurchlässigkeit und geringem materiellem und fertigungstechnischem Aufwand besitzt. Die Wasserdampfdurchlässigkeit erleichtert die Umsetzung der Wärmeschutzverordnung bei Verwendung des Verbundes als Unterspannbahn, und die hohe Dehnung macht das Auftreten von Undichtigkeiten selbst bei Verlegung unter hohen Belastungen wenig wahrscheinlich.

## Patentansprüche

1. Verbund umfassend eine Trägerschicht und eine wasserdampfdurchlässige Kunststoffschicht, **dadurch gekennzeichnet, daß** die Kunststoffschicht eine Dehnung von 250 bis 500% nach DIN 53455/ISO 527, eine Kratzfestigkeit von 60 bis 90 Shore D und eine Wasserdampfdurchlässigkeit von 250 bis 1500 g/(m²d) nach DIN 53122 Klima B besitzt.

2. Verbund gemäß Anspruch 1, **dadurch gekennzeichnet, daß** der Verbund zusätzlich eine Klebstoffschicht zwischen der Trägerschicht und der Kunststoffschicht umfaßt.

3. Verbund gemäß Anspruch 1 oder 2, **dadurch gekennzeichnet, daß** der Verbund auf der außenliegenden Seite der Trägerschicht und/oder Kunststoffschicht zusätzlich eine Verstärkungsschicht umfaßt.

4. Verbund gemäß einem oder mehreren der vorhergehenden Ansprüche, **dadurch gekennzeichnet, daß** die Kunststoffschicht 20 bis 150 µm dick ist.

5. Verbund gemäß einem oder mehreren der vorhergehenden Ansprüche, **dadurch gekennzeichnet, daß** die Kunststoffschicht aus einem (Co)polyamid besteht.

6. Verbund gemäß Anspruch 5, **dadurch gekennzeichnet, daß** die Kunststoffschicht aus einem Polyamid-6/Polyamid-66/Polyamid-12-Blockcopolymer besteht.

7. Verbund gemäß einem oder mehreren der vorhergehenden Ansprüche, **dadurch gekennzeichnet, daß** die Trägerschicht ein Flächengewicht von 20 bis 300 g/m² und eine Dicke von 0,15 bis 1,5 mm besitzt.

8. Verbund gemäß einem oder mehreren der vorhergehenden Ansprüche, **dadurch gekennzeichnet, daß** die Trägerschicht aus einer Vliesschicht besteht.

9. Verbund gemäß Anspruch 8, **dadurch gekennzeichnet, daß** Fasern der Vliesschicht aus einem oder mehreren Polymeren ausgewählt aus Polyamid, Polyester oder Polyolefin bestehen.

10. Verbund gemäß Anspruch 9, **dadurch gekennzeichnet, daß** die Fasern aus einem Polyesterkern und einem Polyamidmantel bestehen.

11. Verbund gemäß Anspruch 10, **dadurch gekennzeichnet, daß** die Kunststoffschicht aus einem (Co)polyamid besteht.

12. Verfahren zur Herstellung eines Verbundes gemäß einem der Ansprüche 1 bis 11, **dadurch gekennzeichnet, daß** es die Schritte umfaßt:
(a) Extrudieren einer Mischung, die ein Granulat des thermoplastischen Kunststoffs umfaßt, durch eine schlitzartige Düse zu einer Kunststoffschicht;
(b) Ablegen der extrudierten Kunststoffschicht auf einer Trägerschicht und Laminieren der so hergestellten Kombination aus Trägerschicht und Kunststoffschicht, wobei die Trägerschicht auf der der Kunststoffschicht zugewandten Seite gegebenenfalls mit einem Klebstoff versehen ist; und
(c) gegebenenfalls Laminieren der Kunststoffschicht und/oder der Trägerschicht mit einer Verstärkungsschicht auf der außenliegenden Seite der Kunststoffschicht bzw. der Trägerschicht.

13. Verfahren gemäß Anspruch 12, **dadurch gekennzeichnet, daß** Schritt (a) in einer 3-Zonenschnecke durchgeführt wird und die Kunststoffschicht über ein Breitschlitzwerkzeug extrudiert wird.

14. Verfahren gemäß Anspruch 12 oder 13, **dadurch gekennzeichnet, daß** die Extrusionsmischung im Extruder auf eine Temperatur von 190-230°C erhitzt und unter einen Druck von 140-160 bar (14-16 MPa) gesetzt wird.

15. Verfahren gemäß einem oder mehreren der Ansprüche 12 bis 14, **dadurch gekennzeichnet, daß** die extrudierte Kunststoffschicht im Schritt (b) ohne Verwendung eines Klebstoffs auf der Trägerschicht abgelegt und die so hergestellte Kombination zwischen auf eine Temperatur von 10-20°C abgekühlten Walzen laminiert wird.

16. Verwendung des Verbundes gemäß einem oder mehreren der Ansprüche 1 bis 11 als Unterspannbahn für Dachkonstruktionen, wobei die Trägerschicht dachseitig innen und die Kunststoffschicht dachseitig außen liegt.

## Claims

1. A laminate comprising a support layer and a plastic layer which is permeable to water vapor, **characterized in that** said plastic layer has an elongation of 250 to 500% according to DIN 53455/ISO 527, a scratch resistance of 60 to 90 Shore D and a water vapor permeability of between 250 and 1,500 g/(m²d) according to DIN 53122 Climate B.

2. A laminate according to claim 1, **characterized in that** said laminate further comprises an adhesive layer between said support layer and said plastic layer.

3. A laminate according to claim 1 or 2, **characterized in that** said laminate further comprises a reinforcing layer on the external side of said support layer and/or plastic layer.

4. A laminate according to one or more of the preceding claims, **characterized in that** said plastic layer is between 20 and 150 µm in thickness.

5. A laminate according to one or more of the preceding claims, **characterized in that** said plastic layer consists of a (co)polyamide.

6. A laminate according to claim 5, **characterized in that** said plastic layer consists of a polyamide-6/polyamide-66/polyamide-12 block copolymer.

7. A laminate according to one or more of the preceding claims, **characterized in that** said support layer has an area-related weight of between 20 and 300 g/m² and a thickness of between 0.15 and 1.5 mm.

8. A laminate according to one or more of the preceding claims, **characterized in that** said support layer consists of a layer of non-woven material.

9. A laminate according to claim 8, **characterized in that** the fibers of said layer of non-woven material consist of one or more polymers, selected from polyamide, polyester or polyolefin.

10. A laminate according to claim 9, **characterized in that** said fibers consist of a polyester core and a polyamide sheath.

11. A laminate according to claim 10, **characterized in that** said plastic layer consists of a (co)polyamide.

12. A method for producing a laminate according to any of claims 1 to 11, **characterized in that** it comprises the steps of:
(a) extruding a mixture comprising a granulate of the thermoplastic plastic material through a slot-like nozzle to form a plastic layer;
(b) depositing the extruded plastic layer on a support layer and laminating the combination of support layer and plastic layer thus produced, with said support layer being optionally provided with an adhesive on the side facing said plastic layer; and
(c) optionally laminating said plastic layer and/or said support layer with a reinforcing layer on the external side of said plastic layer and/or said support layer.

13. A method according to claim 12, **characterized in that** step (a) is carried out in a three-zone screw and said plastic layer is extruded through a slot die.

14. A method according to claim 12 or 13, **characterized in that** the extrusion mixture is heated in the extruder to a temperature of between 190 to 230°C and is subjected to a pressure of between 140 to 160 bar (14 to 16 MPa).

15. A method according to one or more of claims 12 to 14, **characterized in that** in step (b), the extruded plastic layer is deposited on said support layer without an adhesive being used, and the combination thus produced is laminated between rolls cooled to a temperature of between 10 to 20°C.

16. A use of the laminate according to one or more of claims 1 to 11 as a base web for roof constructions, with the support layer lying on the inside on the roof side, and the plastic layer lying on the outside on the roof side.

## Revendications

1. Structure composite comprenant une couche de support et une couche en matière synthétique perméable à la vapeur d'eau, **caractérisée en ce que** la couche en matière synthétique présente un allongement de 250 à 500% selon la norme DIN 53455/ISO 527, une résistance aux rayures de 60 à 90 Shore D et une perméabilité à la vapeur d'eau de 250 à 1500 g/cm² selon DIN 53122 climat B.

2. Structure composite selon la revendication 1, **caractérisée en ce que** la structure composite comprend de plus une couche en matière adhésive entre la couche de support et la couche en matière synthétique.

3. Structure composite selon la revendication 1 ou 2, **caractérisée en ce que** la structure composite comprend de plus une couche de renforcement sur le côté externe de la couche de support et/ou de la couche en matière synthétique.

4. Structure composite selon une ou plusieurs des revendications précédentes, **caractérisée en ce que** la couche en matière synthétique a une épaisseur de 20 à 150 µm.

5. Structure composite selon une ou plusieurs des revendications précédentes, **caractérisée en ce que** la couche en matière synthétique consiste en un (co)polyamide.

6. Structure composite selon la revendication 5, **caractérisée en ce que** la couche en matière synthétique consiste en un copolymère séquencé polyamide-6/polyamide-66/polyamide-12.

7. Structure composite selon une ou plusieurs des revendications précédentes, **caractérisée en ce que** la couche de support présente un grammage de 20 à 300 g/m² et une épaisseur de 0,15 à 1,5 mm.

8. Structure composite selon une ou plusieurs des revendications précédentes, **caractérisée en ce que** la couche de support consiste en une couche de non-tissé.

9. Structure composite selon la revendication 8, **caractérisée en ce que** les fibres de la couche de non-tissé consistent en un ou plusieurs polymères choisis à partir de polyamide, polyester ou polyoléfine.

10. Structure composite selon la revendication 9, **caractérisée en ce que** les fibres consistent en un noyau de polyester et une enveloppe de polyamide.

11. Structure composite selon la revendication 10, **caractérisée en ce que** la couche en matière synthétique consiste en un (co)polyamide.

12. Procédé pour la fabrication d'une structure composite selon l'une des revendications 1 à 11, **caractérisé en ce qu'**il comprend les étapes consistant à :
(a) extruder un mélange, qui comprend un granulat de matière synthétique thermoplastique, à travers une tuyère à fente pour former une couche en matière synthétique;
(b) déposer la couche en matière synthétique extrudée sur une couche de support et stratifier la combinaison ainsi préparée de couche de support et de couche en matière synthétique, tandis que la couche de support sur le côté dirigé vers la couche en matière synthétique est éventuellement munie d'une matière adhésive; et
(c) éventuellement, feuilleter la couche en matière synthétique et/ou la couche de support avec une couche de renforcement sur le côté externe de la couche en matière synthétique ou de la couche de support.

13. Procédé selon la revendication 12, **caractérisé en ce que** l'étape (a) est exécutée dans une vis sans fin à 3 zones et la couche en matière synthétique est extrudée par un outil à fente large.

14. Procédé selon la revendication 12 ou 13, **caractérisé en ce que** le mélange d'extrusion est chauffé dans l'extrudeuse à une température de 190-230°c et exposé à une pression de 140-160 bars (14-16 MPa).

15. Procédé selon l'une ou plusieurs des revendications 12 à 14, **caractérisé en ce que** la couche en matière synthétique extrudée à l'étape (b) est déposée sans l'aide d'une matière adhésive sur la couche de support et la combinaison ainsi réalisée est stratifiée entre des cylindres refroidis à une température de 10-20°C.

16. Utilisation de la structure composite selon l'une ou plusieurs des revendications 1 à 11 en tant que membranes sous-toiture, la couche de support étant située intérieurement côté toit et la couche en matière synthétique extérieurement côté toit.
